(19) Europäisches Patentamt / European Patent Office / Office européen des brevets

(11) **EP 2 901 642 B1**

(12) **EUROPEAN PATENT SPECIFICATION**

(45) Date of publication and mention
of the grant of the patent:
**07.11.2018 Bulletin 2018/45**

(21) Application number: **12768780.4**

(22) Date of filing: **27.09.2012**

(51) Int Cl.:
***H04L 29/08*** *(2006.01)*

(86) International application number:
**PCT/EP2012/069092**

(87) International publication number:
**WO 2014/048477 (03.04.2014 Gazette 2014/14)**

(54) **CONTENT DELIVERY IN A COMMUNICATIONS NETWORK**

INHALTÜBERTRAGUNG IN EIMEN KOMMUNIKATIONSNETZWERK

TRANSMISSION DE CONTENU DANS UN RÉSEAU DE COMMUNICATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2015 Bulletin 2015/32**

(73) Proprietor: **Telefonaktiebolaget LM Ericsson
(publ)
164 83 Stockholm (SE)**

(72) Inventors:
• **MIHÁLY, Attila
H-2120 Dunakeszi (HU)**
• **WESTBERG, Lars
S-745 96 Enköping (SE)**

(74) Representative: **Ericsson
Patent Development
Torshamnsgatan 21-23
164 80 Stockholm (SE)**

(56) References cited:
**US-A- 5 908 467        US-A- 5 908 467
US-A1- 2003 074 379    US-A1- 2003 074 379
US-A1- 2008 192 820    US-B1- 6 304 909
US-B1- 6 304 909**

## Description

### Technical field

The present invention relates to content delivery in a communications network.

### Background

A significant proportion of Internet traffic relates to bulk transfers such as software downloads, delivery of video content and podcast services. There are generally two options at present for the end user for the delivery of such content.

The first option is a direct viewing or playing of the content, such as a Linear TV or Progressive Download service, where the user starts to view or play the content straight away, whilst the content is still being delivered and before the entire content has been received.

However, such content often does not need to be delivered to the end user straight away, and the second option is a podcast approach where the content is downloaded to a memory in the user's device for playback subsequently, after the download is complete. The user can then play the content without interruptions. Several Internet radio stations support the podcast approach.

The problem with the delivery of such content, particularly for the delivery of high quality video content, is that a high load is generated in the network and this can impact the response times for normal Internet traffic, leading to a deterioration of the quality of service experienced by other users.

With the podcast approach, one possibility is to schedule the download during periods of low demand (such as during the night), when the overall network load is lower. This can be achieved by defining specific start and end times (e.g. 23:00 to 6:00) when podcast transfers can be made. Random start times during these hours can be used to average out the load.

However, using this approach the end user will have difficulty in determining when the download will be started and completed, or in other words how long after the user's request they will be able to view or play the content. In this situation, the temptation will be for the user to download the content immediately; even if the user does not play back the content straight away, at least the user has the certainty of knowing that the content will be stored locally for playback at their time of choosing. This would be to the detriment of network performance, because the content would potentially have been downloaded unnecessarily during a period of network congestion, rather than during a quieter period. If the user does choose to start playback straight away, then this is the first option mentioned above: direct viewing or progressive download.

It is desirable to address the above issues.

US 6,304,909 B1 discloses a server able to calculate the time needed to transfer data requested by a user, and send this information to the client. The user can then decide the transfer method desired, based on the information sent by the server. For example, the user may want immediate transfer, or delayed transfer, or may want to abort the request.

US 2003/074379 A1 discloses a method, system and apparatus for predicting a download time for a file using historical data are provided.

US 5,908,467 A discloses a system and method, for use with network communication systems such as Internet terminals having World Wide Web browsers, for indicating to the user a parameter related to a piece of remote information, such as an estimation of a length of time required to download a given piece of information resident at a remote site.

US 2008/192820 A1 discloses an apparatus and methods for the detection of capacity (e.g., bandwidth) shortage, determination of a delayed delivery mode and schedule for the delivery of the requested content, and notification of the availability of the content to the user via, e.g., on-screen display, e-mail, text message, or other mode. The user can also specify their own notification preferences and delivery time.

### Summary

The invention is defined by a method according to claim 1 and a computer program according to claim 12. Further embodiments are defined by the dependent claims.

A method is presented of requesting and receiving content over a network for use at a device. A request for the content is sent from the device to a content server located in the network. A response is received at the device from the content server. The response provides a content readiness estimate for the requested content. The readiness estimate is an estimate of when the content will be ready for use at the device according to a predetermined criterion, based on network conditions affecting delivery of the content from the content server to the device. A content readiness indication is presented at the device to a user of the device. The readiness indication is derived in dependence upon the readiness estimate and indicates to the user when or whether the content will be or is ready for use at the device according to the predetermined criterion. An instruction is received at the device from the user indicating when the user wishes to commence use of the content at the device. Content is received at the device from the content server and stored it at least until it is required for use. Use of the content is commenced at the device according to the instruction.

Such a method is able to provide the user with an appropriate content delivery estimate which enables the user to make an informed choice as to when to commence use of the content. This in turn will help to reduce traffic in the network because, with the relevant information available, the user may choose to defer download of the content until a time when the network is less busy. It also will help to prevent aborted download of content, where the user commences download and playback of content only to find that playback is interrupted to such an extent as to make the experience unbearable; this leads to unnecessary traffic in the network.

For flexibility, the readiness indication may provide a visual or audible indication as to whether or not the content is ready for use at the device according to the predetermined criterion.

The readiness indication may provide a relative or absolute time at which the content will be ready for use at the device according to the predetermined criterion. For example, the time may be relative to the moment at which the user confirms their request for the content, having seen the readiness indication. Or it may be relative to now, such that a countdown is presented. Or it may be an absolute time: for example the content will be ready at 19:46hrs.

The method may comprise receiving the instruction after presentation of the readiness indication to the user. In other words, the user is informed by the readiness indication, and the instruction is given in response to or dependent upon the readiness indication.

The method may comprise receiving the content readiness estimate before receiving any content. This distinguishes from other systems where perhaps content receipt commences, and only then can an estimate of the remaining download time be provided, based on the progress of download. With an embodiment of the present invention, the readiness estimate is provided in advance of providing any content, or at least can be.

The readiness estimate may also be updated during the course of content delivery, to take account of changes in network conditions. This helps to maintain accuracy of the readiness indication being presented to the user.

Where the readiness indication provides a relative or absolute time at which the content will be ready for use at the device according to the predetermined criterion, the user may be presented with an option of commencing use of the content at the relative or absolute time provided in the readiness indication, or at a predetermined time thereafter. With such an option, the instruction may be to commence use of the content at the relative or absolute time provided in the readiness indication, or at a predetermined time thereafter.

The user may be presented with an option of commencing use of the content regardless of whether or not the content is indicated as being ready for use according to the readiness indication, and in particular where the readiness indication indicates that the content is not ready for use. With such an option, the instruction may be to commence use of the content regardless of whether or not the content is indicated as being ready for use according to the readiness indication.

Where at least some content has already been received, the instruction may be to commence use of the content immediately. Where content has not already been received, the instruction may be to commence use of the content upon or soon after first receipt of content.

The user may be presented with an option of downloading the entire content for later use. With such an option, the instruction may be to download the entire content and await further instruction as to when the user wishes to commence use of the content at the device. The method may comprise presenting the user with an option to schedule a time to download the content. This provides enhanced choice for the user.

The method may comprise presenting the user with an option to use a higher network priority for content delivery. This provides enhanced choice for the user.

The various options may be associated with different respective costs to the user.

The method may comprise commencing receipt of content before receiving the instruction. In other words, the device need not wait to receive the user's choice before beginning download. This enables use cases in which the readiness indication is provided to the user during the course of content delivery, for example a red/green indication to inform the user of the readiness of the content for use.

The content may be of a type that has a plurality of content elements intended to be used in time sequence, with the content elements being received from the content server substantially in time sequence to enable use of the content to be commenced before the entire content has been received at the device. An example of course is video or audio content.

The instruction may be to commence use of the content before the entire content has been received at the device (the readiness indication may or may not be indicating that the content is ready for use at the device according to the predetermined criterion when the instruction is received). This is a particularly advantageous scenario, because it enables the user to know (for example) when continuous playback of video can be commenced, even before the entire video content has been downloaded.

The predetermined criterion may be that the content can be used continuously or without interruption, that is without having to pause in order to receive further content before use can recommence.

The predetermined criterion may be that the content is received in its entirety. Thus the readiness indication would indicate when the entire content is estimated as being delivered.

The content may comprise playable content, such as video or audio content, and wherein using the content comprises playing the content.

The readiness estimate may relate to the time estimated as being required to buffer content at the device prior to commencement of playback to provide continuous or uninterrupted playback.

A method is proposed for use at a content server for delivering content over a network for use at a remote device. A request for content is received at the content server from the device. A request for a content readiness estimate for the requested content is sent from the content server to a delivery prediction function, the readiness estimate being an estimate of when the content will be ready for use at the device according to a predetermined criterion, based on network conditions affecting delivery of the content from the content server to the device. The readiness estimate is received at the content server from the delivery prediction function. A response is sent from the content server to the device providing the readiness estimate. The requested content is sent from the content server to the device.

The delivery prediction function may be located at the content server.

The method may comprise arranging delivery of other content to the and other devices of the network taking account of, or to ensure accuracy of, the readiness estimate for the requested content.

A method is proposed for use at the above-mentioned delivery prediction function. The request for a content readiness estimate is received at the delivery prediction function from the content server. The delivery prediction function determines the readiness estimate by estimating when the content will be ready for use at the device according to a predetermined criterion, based on network conditions affecting delivery of the content from the content server to the device. The delivery prediction function sends the readiness estimate to the content server.

The method may comprise performing the estimating step taking account of data relating to historical resource consumption of the device.

The method may comprise performing the estimating step taking account of throughput in the device's current network cell.

The method may comprise, at least where movement of the device between network cells is determined to be possible or likely before use of the content is commenced at the device, performing the estimating step taking account of data relating to historical mobility of the device amongst a plurality of network cells visited by the device, with network conditions within those visited cells influencing the performance of the estimating step.

The method may comprise determining that movement between network cells is possible or likely before use of the content is commenced at the device if an estimation of when the content will be ready for use at the device based on throughput in the device's current network cell is after the total time required for use of the content by a predetermined factor or amount.

The readiness estimate may be an estimate of when, relative to a predetermined event, such as first receipt of content at the device, the content will be so ready.

A device is proposed that is adapted for requesting and receiving content over a network for use at the device. The device has an output for sending (or arranged to send) a request for a content to a content server located in a network. The device has an input for receiving (or arranged to receive) a response from the content server providing a content readiness estimate for the requested content, the readiness estimate being an estimate of when the content will be ready for use at the device according to a predetermined criterion, based on network conditions affecting delivery of the content from the content server to the device. The device has a controller for presenting (or arranged to present) a content readiness indication to a user of the device, the readiness indication being derived in dependence upon the readiness estimate and indicating to the user when or whether the content will be or is ready for use at the device according to the predetermined criterion. The controller is also for receiving (or arranged to receive) an instruction from the user indicating when the user wishes to commence use of the content at the device. The input is also for receiving (or arranged to receive) content from the content server and storing it at least until it is required for use. The device has a content consumption controller for commencing (or arranged to commence) use of the content according to the instruction.

A content server is proposed for delivering content over a network for use at a remote device. The content server has an input for receiving (or arranged to receive) a request for content from the device. The content server has an output for sending (or arranged to send) to a delivery prediction function a request for a content readiness estimate for the requested content, the readiness estimate being an estimate of when the content will be ready for use at the device according to a predetermined criterion, based on network conditions affecting delivery of the content from the content server to the device. The input is also for receiving (or arranged to receive) the readiness estimate from the delivery prediction function. The output is also for sending (or arranged to send) a response to the device providing the readiness estimate. The output is also for sending (or arranged to send) the requested content to the device.

A delivery prediction function is proposed comprising an input for receiving (or arranged to receive) a request for a content readiness estimate from a content server. The delivery prediction function has a content readiness estimator for determining (or arranged to determine) the readiness estimate by estimating when the content will be ready for use at the device according to a predetermined criterion, based on network conditions affecting delivery of the content from the content server to the device, and an output for sending (or arranged to send) the readiness estimate to the content server.

A computer program is also proposed for controlling an apparatus to perform a method as herein proposed, or which, when loaded into an apparatus, causes the apparatus to become an apparatus as herein proposed. The computer program may be carried on a carrier medium. The carrier medium may be a storage medium. The carrier medium may be a transmission medium. An apparatus programmed by such a computer program is also envisaged, as is a storage medium containing such a computer program.

## Brief description of the drawings

Figure 1 is a schematic of a user equipment employing a method according to an embodiment of the invention;

Figure 2 is a signalling chart of a method according to an embodiment of the present invention;

Figure 3 is a schematic timeline of content consumption according to an embodiment of the present invention;

Figure 4 illustrates example input criteria to a delivery prediction function according to an embodiment of the present invention;

Figure 5 shows a number of delivery allocation approaches;

Figure 6 is a flow diagram outlining the steps in a delivery prediction function according to an embodiment of the present invention;

Figure 7 is a flow diagram outlining the steps in an alternative delivery prediction function according to an embodiment of the present invention;

Figure 8 is a block diagram showing elements of a user equipment according to an embodiment of the present invention;

Figure 9 is a block diagram showing elements of a content server according to an embodiment of the present invention;

Figure 10 is a block diagram showing elements of a delivery prediction function according to an embodiment of the present invention;

Figure 11 is a flow diagram outlining a method performed at a user equipment according to an embodiment of the present invention;

Figure 12 is a flow diagram outlining a method performed at a content server according to an embodiment of the present invention; and

Figure 13 is a schematic illustration of a node in which a method embodying the present invention can be implemented.

## Detailed description

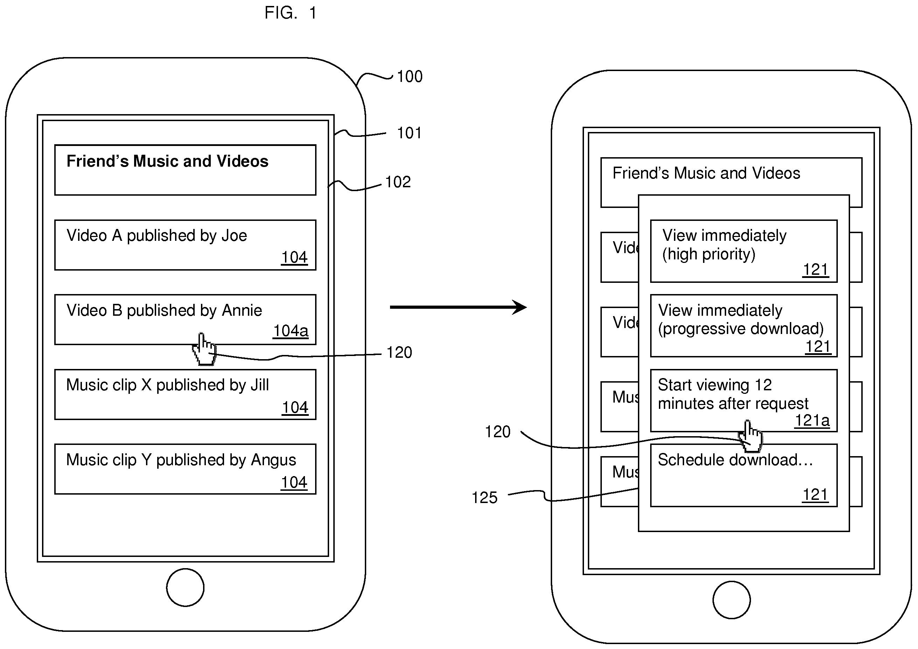

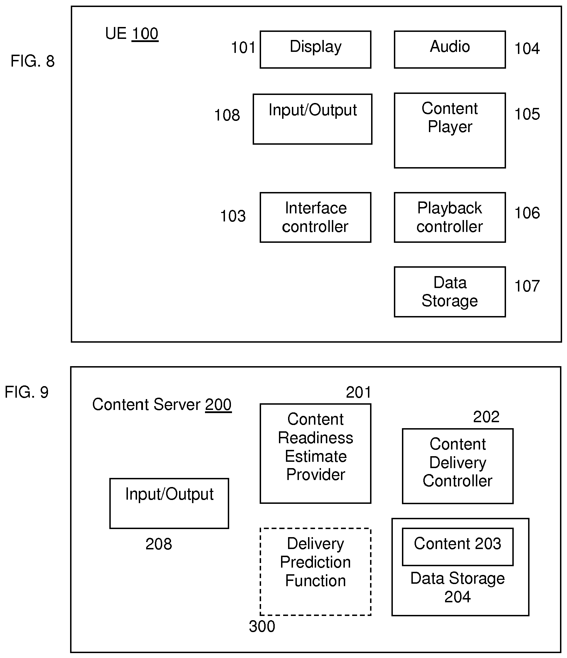

Referring to Figures 1 and 8, a user equipment 100 is shown comprising a display 101 that provides a content selection interface 102. In the example of Figure 1, the user equipment is a mobile phone, but it will be appreciated that in other embodiments, the user equipment may be another type of device such as a tablet, or a notebook or desktop computer. In Figure 1, the content selection interface 102 is showing a selection of media content items, comprising video and audio files, each of which is not initially stored on the user equipment 100, but is instead stored on a content server 200.

In the example embodiment each of the content items comprises media but other types of content are envisaged as within the scope of the invention, for example game content may be streamed in some embodiments.

The user equipment 100 is provided with a content selection interface 102 by which the user may select one of the content items 104 displayed in the content selection interface 102 for consumption on the user equipment 100. The content selection interface 102 in this example employs a touchscreen interface controller 103 so that touching a box describing an item of content indicates that the user wishes to consume that content. The selected content 104a is indicated in Figure 1 by a cursor 120.

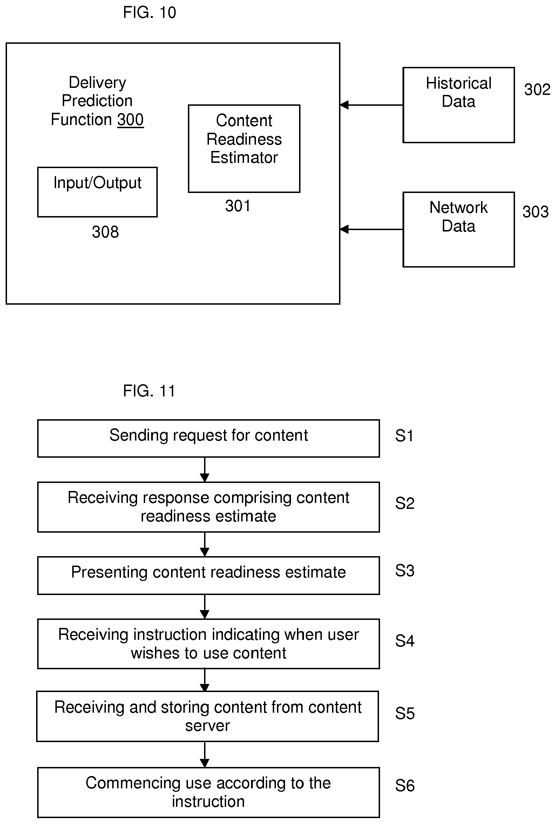

Having selected a video file 104a for consumption, the content selection interface 102 subsequently provides a content download option dialog 125 from which a number of content download options 121 may be selected. The content download options 121 may each be displayed and/or modified based on an estimated delivery time from a delivery prediction function 300 (see Figure 9 and Figure 10), as explained hereinafter.

The content download options 121 in this example are:

- view content immediately, giving the download an enhanced priority;
- view content immediately, giving the download normal download priority;
- start consuming the content 12 minutes after request; and
- schedule downloading of the content.

As will be explained hereinafter, the options displayed may be modified based on the estimated delivery time received by the user equipment 100. For instance, if the estimated download delivery time is much shorter than the estimated duration of consuming the content, given a normal download priority, it may be unnecessary to give the user the option of an enhanced download priority, since in this case it is likely to be possible to immediately begin consuming the content as it is downloaded without delay.

In the present case, it has been estimated by the delivery prediction function 300 that the download delivery time, given a normal priority, for the selected video file is greater than the time that will be taken to consume the content (i.e. the duration of the video). A start time has been calculated by the delivery prediction function 300, which is the duration of downloading that is required to allow the user to subsequently watch the video without freezing or buffering pauses. In the present case, the start time is 12 minutes hence. More generally, the start time of 12 minutes can be considered to be an estimate of when the content will be ready for use at the user equipment 100 according to some criterion, where the criterion here is that the content will be sufficiently buffered that playback (use or consumption) can be commenced without interruptions in playback. Similarly, it has been calculated that if the download is given an enhanced priority, the download delivery time will be shorter than the viewing time, and the start time is substantially zero seconds. Accordingly the content may be viewed immediately without pausing or freezing during playback, provided an enhanced download priority is applied.

The options that the user is presented are modified based on the estimated delivery time. In the present case, the download options may indicate that viewing the content immediately without enhanced priority is likely to result in a degraded user experience. This indication may be provided in a number of ways, for instance by colour coding the options 121 so that option of viewing content immediately with a normal download priority is red. Furthermore, in the third option, wherein viewing of the video is delayed by a predetermined period, the delay period of 12 minutes is based the pre-calculated estimate of the download delay necessary to provide continuous playback. The final option of scheduling download of the content may require the user to select a future time by which they wish to have the content locally available on the user equipment 100, and the downloaded may subsequently be scheduled to balance network traffic and to ensure that the content is delivered in a timely way. In this example, the user selects download option 121a, which is to start consuming the content in 12 minutes.

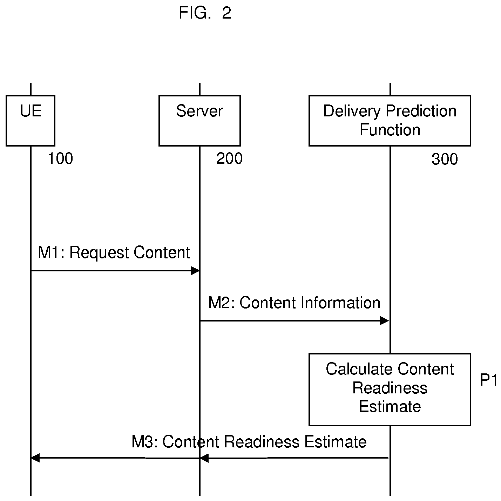

Figure 2 shows the signalling that occurs when a user equipment 100 requests content according to an embodiment of the present invention. The user equipment sends a message M1 to the server 200, requesting content. The server 200 communicates information in message M2 relating to the selected content to a delivery prediction function 300. The delivery prediction function 300 then calculates in P1 a content readiness estimate for the content which comprises an estimate of when the content will be ready for use at the device 100, according to a predetermined criterion. The delivery prediction function 300 communicates the content readiness estimate to the content server 200 in message M3, which in turn sends the content readiness estimate to the user equipment 100. Examples of methods that may be employed by the delivery prediction function 300 are explained more fully hereinafter. In brief, the delivery prediction function 300 may use historical traffic statistics, current network conditions and estimated future network conditions, as well as historical user data (such as historical mobility of the user equipment 100 and/or historical resource consumption of the user equipment 100) in its calculation.

The following description of the delivery prediction function 300 is for an embodiment in which the content to be delivered is a video file. In some embodiments, there is an operator supported video delivery service comprising an integrated delivery prediction function. The integrated delivery prediction function means that when a video is requested by the user, a play start time can be estimated. In previously-considered systems, the user is typically presented with an animated icon or cursor, and must simply wait for an indeterminate period for content to buffer, and furthermore may have to endure pauses in the content if the buffer is depleted during playback.

Three broad cases can be identified as the outcome from the delivery prediction function, based on the difference between the calculated start time (which is the duration of downloading calculated as necessary to ensure subsequent continuous or uninterrupted playback): Firstly, the start time may be very small, for example of the order of a few seconds or less. In this case it is possible for the user to view the selected content substantially immediately, with only a negligible period of buffering. Where this is the case, the user will be presented with the option to begin playback instantaneously, since the rate of data consumption during playing is smaller than the rate at which the data is downloaded at all times.

The second case is where the start time is less than the total duration of the video. This may happen where the estimated delivery time for the full content to be downloaded is larger than the total duration of the content, and may also occur when the delivery time is less than the total duration of the video. In the former situation, the resolution of the video may require a relatively high data rate which is higher than can be transferred in real time. If the difference between the transfer data rate and the video data rate is not too high, an extended pre-buffering may be used to avoid frozen images during playback. In the latter situation, while the average download rate may be higher than the average playback data rate, there may be short term variations in the data rate of the content, and short term variations in the available download rate due, for instance due to changes in network load. A buffer may therefore be needed to accommodate these variations. The size of the necessary buffer is estimated by the delivery prediction function, and a start time estimated accordingly. The buffer may for example be in the range of 3 to 30 seconds. In the case of a 20 second buffering time, in the absence of any reliable indication of progress, the user may become frustrated and assume that the video is not available. This problem is mitigated by providing the user with an estimated start time, and a number of selections for downloading the content. Furthermore, if the user selects a download option with a non-negligible start time, an indication such as a countdown may be provided of progress, based on the elapsed downloading time and the start time.

The third general case is where the start time is much larger than the total duration of the content to be consumed. In this case, the best solution is for the delivery prediction function to return the start time as the total delivery time, and to let the content be fully downloaded before consumption begins (like an audio podcast). This download mode is obviously available for all download rates, and can be used to ensure a smooth consumption of content independent of download speed.

In the latter case, there is the potential to arrange the download so as to make most efficient use of network resources. Since the user is not relying on the transfer speed in order to stream content, it is likely to be acceptable that the download rate is slower. In this case other traffic on the network, e.g. WEB-traffic and Voice/WEB-traffic may be given a higher priority than the bulk transfer download of the content for later consumption. The bulk traffic transfer may therefore be at a reduced rate, preventing excessive use of network resources by a background download where the download rate is not critical to the user. Furthermore, it may be possible to allow the user to specify when they require their content to be available, for example by 20:00hrs tomorrow, and the download may subsequently be scheduled to make optimal use of the network by downloading during periods of minimum traffic. The network traffic may thereby be balanced, and the user will have the benefit of knowing that the content is to be delivered within a definite timescale.

In the second and third general case, in which the start time is non-negligible, the delivery prediction function 300 may need to consider the statistics of the daily traffic pattern to predict the potential delivery time.

Referring to the second general case, in which the start time is less than the duration of the content, there are several options. If the network throughput is sufficient, the delivery prediction function may respond with the necessary pre-buffering time to ensure smooth consumption. In the throughput varies over short timescales, the buffering may be extended to handle the temporal variations. The additional buffering required by the throughput variations may be estimated as follows.

-    Determine the average available bandwidth by calculating a moving average: e.g. $X(n) = a*B(n)+(1-a)*X(n-1)$, where B is an instant available bandwidth measurement. Similarly, also calculate the variance of the measurements

-    Using the above measures, estimate the maximum and minimum available bandwidth, and then estimate the additional buffering necessary to handle the temporal variations as the product of the difference between the maximum and minimum available bandwidth and the average time period,

If the throughput is lower than the play-out rate, the viewing must be delayed until a sufficient part of the content had been downloaded.

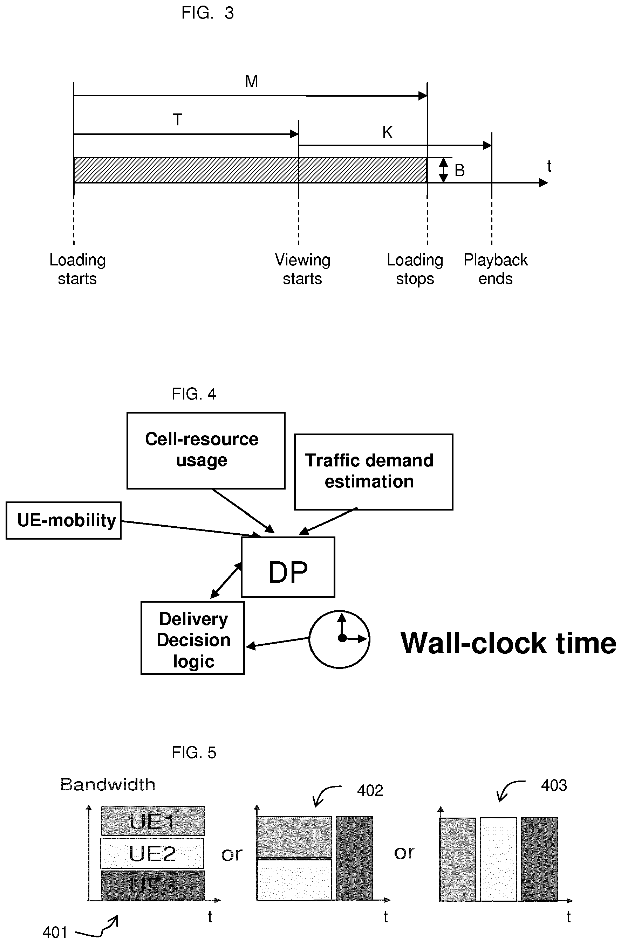

Figure 3 shows how a simple estimation of the start time in this case may be calculated. In this case, the total duration of the download M is calculated based on the bandwidth B, and is greater than the duration K of the video content. The start time T, in which content is buffered, is calculated to ensure that playing of the video ends after the complete content has been downloaded. During playing of the video the buffer size, denoted by V, must remain over a minimum size, denoted by C. The buffer size at time t may therefore be calculated by the following: Where:

$$t<T \qquad V=B*t;$$

$$T<t<M \qquad V=B*t - P*(t-T);$$

$$M<t<(T+K) \qquad V=B*M - P*(t-T)$$

where P is the average playback rate.

If lower than best effort transfer should be applied, for example to a scheduled download for future viewing, an estimate can be made by code tree analysis or throughput analysis, as will be more fully explained hereinafter.

Where the delivery time is much greater than the duration of the content, consideration should be given to the usage of resource over the whole network. A key problem is the that the user equipment may be mobile, being for instance a mobile phone, and furthermore, the user may need to consume further data user the equipment, for instance to make voice calls, or web browse etc. The mobility of the equipment may result in variations in the throughput capabilities in the network node to which the user equipment (UE) is connected. In order to mitigate these problems, a number of factors may be taken into account in estimating the delivery time, as depicted in Figure 4 and explained below.

UE mobility: A history of cells the UE has visited. This information can be used to determine cells to which the UE is likely to be connected during the downloading of content.

Cell resource usage: The cells to which the UE is likely to connect may have a different resource usage and load pattern. Therefore, consideration must be given to the varying levels of resources that may be available to the UE at different times during the download.

Traffic demands: This can represent the history of aggregated cell throughput.

Wall-clock: One way to avoid data congestion in the network is to schedule transfers by wall clock time. Different transfers may be co-ordinated, including on different UE, as explained hereinafter.

A number of requests can be queued, and the volume scheduled to ensure that the predicted delivery time of one or each specific content still holds, as illustrated in Figure 5. In the first case 401, three simultaneous download sessions are ongoing on three UEs: UE1, UE2 and UE3 respectively. The delivery prediction will accordingly deliver the same delivery time to all three UEs. In the second case 402, two simultaneous transfers to UE1 and UE2 are finished before a further transfer to UE3 is started. The delivery prediction provided to the user gives an indication of the delivery time to the user.

In the third case 403, the download sessions to each of the three UEs are sequential, with UE1 completing its download before UE2, which completes its download before UE3. Each download on each UE thereby takes the minimum amount of time. High peak transfer speeds and shorter download times generally give improved battery efficiency at the UE and may therefore be preferred. The delivery prediction gives the time when each respective transfer to UE1, UE2 and UE3 will be completed.

The application controlling the playback on the UE may either query or request transfer of content. The query/request can include parameters that demand an estimation of delivery time.

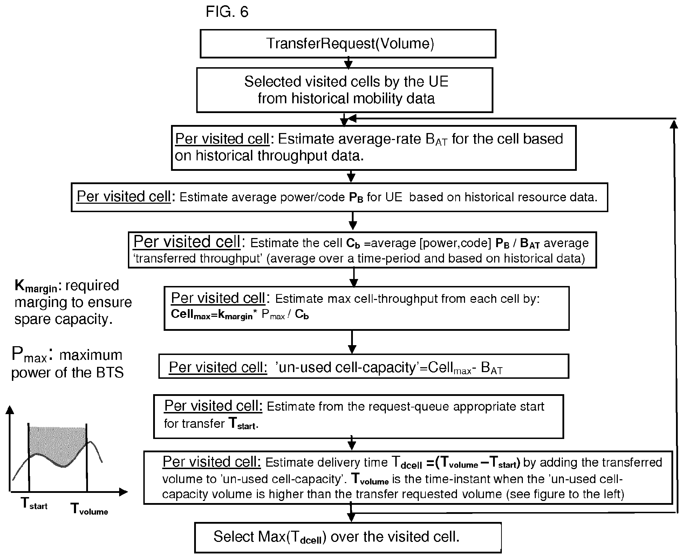

Figure 6 shows a sequence diagram indicating a method for estimating delivery time. According to this method, having received a transfer request from the UE, cells are selected that the UE is likely to visit, based on historical mobility data. The delivery time is subsequently estimated, based on distributing the download between the cells. The distribution of the download between the cells may be calculated to make optimum use of the spare capacity at each cell. The values from the daily profile of the average load values are indicative for the load at a specific time of day, but the actual load at a certain time may obviously differ.

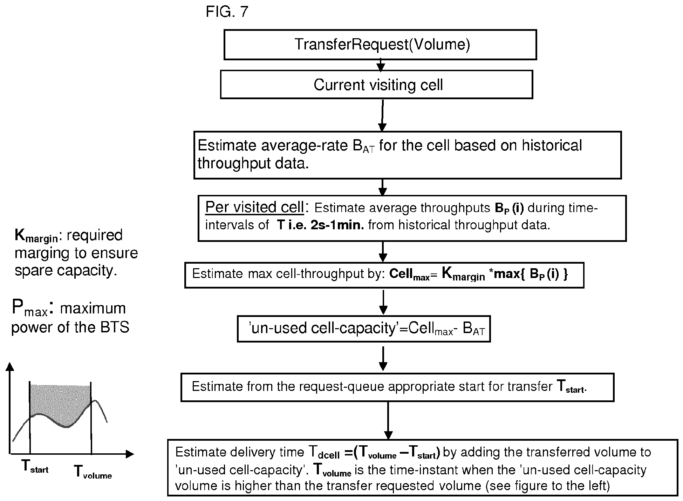

Figure 7 shows a second method based on a short term average, which may be implemented as part of the method of Figure 6. This model assumes that the UE will remain in a single cell for the duration of the transfer. This may be the case where the duration of the transfer is relatively short, and the typical pattern of movement between cells indicates that a change in cell is not likely within the period of the download. There is subsequently no need for taking account of conditions in multiple cells. The cell load (or other similar parameters that can be used to indicate cell utilisation) is captured and recorded during a longer time period, which $A_i$, during a short time interval T (e.g. one second or one minute). The history may cover a specific time period in a rolling buffer principle.

Returning to Figure 8, a UE 100 is shown according to an embodiment of the present invention, comprising a display 101, interface controller 103, audio output 104, content player 105, playback controller 106, data storage 107 and input/output 108. The display 101 may be used to display the content selection interface 102 described previously with reference to Figure 1, with the user controlling the interface 102 using the interface controller 103, which may be a touchscreen controller as discussed hereinbefore. The audio output 104 may comprise a headphone jack or speaker. The data storage is a data storage medium in which content may be stored and/or buffered. The input/output 108 communicates with other devices to request and receive the content, and incoming data which is buffered in the data storage 107 or stored therein for future consumption. The content player 105 is controlled by the playback controller 106, and is operable to receive data from the data storage 107, or directly from the input/output 108, and controls the display 101 and/or audio output 104 to provide the content to the user.

Figure 9 depicts a content server 200 according to an embodiment of the present invention, comprising an input/output 208, a content readiness estimate provider 201, content delivery controller 202 and content 203. The input/output 208 is operable to receive data comprising requests for content from a UE 100, and further to transmit data to the UE 100. The content readiness estimate provider 201 is operable to calculate the content readiness estimate (a playback delay or start time in certain examples) as described hereinbefore, using the delivery prediction function 300. The delivery prediction function 300 may be implemented within the server 200 as depicted in Figure 8, or may be a separate component. The content delivery controller 202 schedules and provides content based on the requests received via the input/output 208 from the UE 100. The content 203 is stored within a data storage 204.

Figure 10 depicts a delivery prediction function 300 according to an embodiment, comprising an input/output 308, and a content readiness estimator 301. The delivery prediction function is provided with historical data 302 and network data 303 as described hereinbefore.

Figures 10 and 11 illustrate the steps performed respectively by the user equipment 100 and the content server 200 according to an embodiment of the invention.

Referring first to the flowchart of Figure 11, in step S1 a request for the content is sent to the content server 200 located in the network. In step S2, a response is received from the content server 200 providing a content readiness estimate for the requested content. The readiness estimate is an estimate of when the content will be ready for use at the user equipment 100 according to a predetermined criterion, based on network conditions affecting delivery of the content from the content server to the device. In this respect, network conditions affecting delivery of the content from the content server to the user equipment 100 can be considered to include not only current network conditions, but also an estimate of future network conditions that are likely to be in effect throughout the duration of the delivery of the content. These future network conditions may, as described in detail elsewhere herein, be estimated based on any one or more of historical network conditions, current network conditions, historical resource consumption at the user equipment 100, historical mobility of the user equipment 100 (which affects what network conditions are likely to be encountered at the user equipment 100 during the course of receiving the requested content).

In step S3, a content readiness indication is presented to a user of the user equipment 100. The readiness indication is derived in dependence upon the readiness estimate and is intended to inform the user when or whether the content will be or is ready for use at the device according to the predetermined criterion. The readiness indication may take a variety of different forms. Referring back to the description relating to Figures 1 and 8, such a content readiness indication would typically be presented on the display 101, though it may be presented audibly instead or in addition. In Figure 1 the content readiness indication is provided at least in the download option 121a presented on the display 101, indicating that the content is estimated to be ready for consumption in 12 minutes.

It will be appreciated that presenting a playback selection interface like that in Figure 1 is just one option for informing the user about the different options, and in particular about when the content is or is likely to be ready for use or consumption. For example, one example that requires less user interaction that illustrated in Figure 1 is that playback of video content starts instantaneously if the estimate from the content server 200 suggests that direct viewing is possible, or otherwise background download commences and a progress bar is presented that has one colour (e.g. red) until the buffer size that is deemed sufficient for freeze-free (continuous or uninterrupted) playback is reached, changing to a different colour (e.g. green) when the required amount of content has been buffered. In such an example, the content readiness indication is the progress bar. Whether playback starts in a prioritized manner or as normal best effort if the user initiates it in the red region may be a pre-configured user option. Such an example would not require any dialog options in the form of what is shown in Figure 1 while still benefitting from the services of the delivery prediction function 300.

In step S4, an instruction is received from the user indicating when the user wishes to commence use of the content at the user equipment 100. In step S5, content is received from the content server 200 and stored in the data storage 107 it at least until it is required for use. In step S6, use of the content is commenced according to the instruction received in step S4.

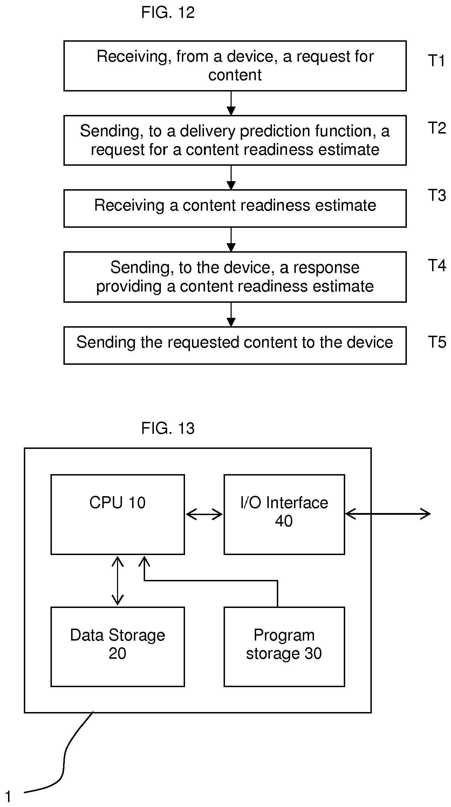

Referring now to the flowchart of Figure 12, in step T1 a request for content is received from the user equipment 100. In step T2 a request for a content readiness estimate for the requested content is sent to the delivery prediction function 300 (which may be located also at the content server 200, or remotely). In step T3 the readiness estimate is received from the delivery prediction function 300. In step T4, a response is sent to the user equipment 100 providing the readiness estimate. In step T5, the requested content is sent to the device user equipment 100.

It will be appreciated that operation of one or more of the above-described components can be provided in the form of one or more processors or processing units, which processing unit or units could be controlled or provided at least in part by a program operating on the device or apparatus. The function of several depicted components may in fact be performed by a single component. A single processor or processing unit may be arranged to perform the function of multiple components. Such an operating program can be stored on a computer-readable medium, or could, for example, be embodied in a signal such as a downloadable data signal provided from an Internet website. Any appended claims now or in future are to be interpreted as covering an operating program by itself, or as a record on a carrier, or as a signal, or in any other form.

Figure 13 is a schematic illustration of a node 1 in which a method embodying the present invention can be implemented. A computer program for controlling the node 1 to carry out a method embodying the present invention is stored in a program storage 30. Data used during the performance of a method embodying the present invention is stored in a data storage 20. During performance of a method embodying the present invention, program steps are fetched from the program storage 30 and executed by a Central Processing Unit (CPU) 10, retrieving data as required from the data storage 20. Output information resulting from performance of a method embodying the present invention can be stored back in the data storage 20, or sent to an Input/Output (I/O) interface 40, which may comprise a transmitter for transmitting data to other nodes, as required. Likewise, the Input/Output (I/O) interface 40 may comprise a receiver for receiving data from other nodes, for example for use by the CPU 10.

The appended signaling diagram(s) can be considered not only to depict a series of messages exchanged and method steps performed by the various nodes, but also to depict apparatus for exchanging those messages or performing those method steps. In addition, for the sake of completeness, any message which is shown or described as being sent from node A to node B implicitly includes the step of node A sending the message as well as the step of node B receiving the message, and means at nodes A and B for performing those steps.

It will be appreciated by the person of skill in the art that various modifications may be made to the above described embodiments without departing from the scope of the present invention.

The present invention addresses a number of significant problems in content delivery over a network. Firstly, it can be used to ensure that an appropriate amount of data is buffered before playback starts to ensure that pauses for further buffering during playback are avoided. Furthermore, knowledge of the required duration of pre-buffering can be used to replace existing non-specific buffering animations with a more definite estimation of the remaining buffering time necessary to ensure smooth playback. This will alleviate user frustration, which frequently results in the user making a repeated request for the content, or closing the content selection interface and forgoing the content entirely. In addition, in some embodiments, network utilisation is improved, battery life in mobile device is improved and data congestion is reduced.

By offering a menu of choices in which the user is informed about the expected delay, they are empowered to make a choice, and to indicate their priority for the download in specific terms such as a time by which the download is required. This is preferable to a situation in which it is unclear when the download will complete, and therefore unclear whether an enhanced download priority would be desirable. Embodiments of the present invention make it possible for the user to balance whether an additional fee for enhanced priority downloading is worth paying, and for the content delivery system to better balance the needs of multiple users based on their preferences.

**Claims**

1. A method of delivering content over a network for use at a device, the method comprising:

   (1) receiving (T1), by a content server, a request for content from the device, wherein the content comprises playable content;
   (2) sending (T2), by the content server, to a delivery prediction function a request for a content readiness estimate for the requested content;
   (3) determining, by the delivery prediction function, the readiness estimate by estimating when the content will be ready for use at the device according to a predetermined criterion, based on network conditions affecting delivery of the content from the content server to the device, wherein the predetermined criterion is that the content can be used continuously or without interruption, without having to pause in order to receive further content before use can recommence,
   wherein the readiness estimate relates to the time estimated as being required to buffer content at the device prior to commencement of playback to provide continuous or uninterrupted playback, and
   wherein the determining step further comprises, upon determining that movement of the device between network cells is possible or likely before use of the content is commenced at the device, performing the estimating step while taking into account data relating to historical mobility of the device amongst a plurality of network cells visited by the device, with network conditions within those visited cells influencing the performance of the estimating step;
   (4) receiving (T3), by the content server, the readiness estimate from the delivery prediction function;
   (5) sending (T4), by the content server, a response to the device providing the readiness estimate; and
   (6) sending (T5), by the content server, the requested content to the device at a time selected by a user of the device to download the requested content.

2. The method of claim 1 further comprising, at the device:

   (a) sending (S1) a request for the content to the content server located in the network;
   (b) receiving (S2) the response from the content server providing the content readiness estimate for the requested content;
   (c) presenting (S3) a content readiness indication to the user of the device, the readiness indication being derived in dependence upon the readiness estimate and indicating to the user when or whether the content will be or is ready for use at the device according to the predetermined criterion;
   (d) receiving (S4) an instruction from the user indicating when the user wishes to commence use of the content at the device;
   (e) receiving (S5) the content from the content server and storing it at least until it is required for use; and
   (f) commencing (S6) use of the content according to the instruction.

3. A method as claimed in claim 2, wherein the readiness indication presented in step (c) provides a relative or absolute time at which the content will be ready for use at the device according to the predetermined criterion.

4. A method as claimed in claim 3, comprising presenting the user with an option of commencing use of the content at the relative or absolute time provided in the readiness indication, or at a predetermined time thereafter, and wherein the instruction received in step (d) is to commence use of the content at the relative or absolute time provided in the readiness indication, or at a predetermined time thereafter.

5. A method as claimed in any one of claim 2 to 4, comprising presenting the user with an option to use a higher network priority for content delivery.

6. A method as claimed in any one of claim 4 to 5, wherein the various options are associated with different respective costs to the user.

7. A method as claimed in any one of claim 2 to 6, wherein the content comprises a plurality of content elements intended to be used in time sequence, and wherein the content elements are received from the content server substantially in time sequence to enable use of the content to be commenced in step (f) before the entire content has been received at the device.

8. A method as claimed in any of claim 2 to 6, wherein the playable content comprises video or audio content, and wherein using the content comprises playing the content.

9. A method as claimed in claim 1, comprising performing the estimating step taking account of throughput in the device's current network cell.

10. A system comprising a delivery prediction function and a content server for delivering content over a network for use at a remote device, the system adapted to perform the method of claim 1, the content server comprising:

    (a) an input (208) for receiving a request for content from the device;
    (b) an output (208) for sending to a delivery prediction function a request for a content readiness estimate for the requested content, the readiness estimate being an estimate of when the content will be ready for use at the device according to a predetermined criterion, based on network conditions affecting delivery of the content from the content server to the device;
    (c) the input (208) also for receiving the readiness estimate from the delivery prediction function;
    (d) the output (208) also for sending a response to the device providing the readiness estimate; and
    (e) the output (208) also for sending the requested content to the device.

11. The system of claim 10, further comprising a device adapted to perform the method of claim 2, wherein the device comprises:

    (a) an output (108) for sending a request for a content to a content server located in a network;
    (b) an input (108) for receiving a response from the content server providing a content readiness estimate for the requested content, the readiness estimate being an estimate of when the content will be ready for use at the device according to a predetermined criterion, based on network conditions affecting delivery of the content from the content server to the device;
    (c) an interface controller (103) for presenting a content readiness indication to a user of the device, the readiness indication being derived in dependence upon the readiness estimate and indicating to the user when or whether the content will be or is ready for use at the device according to the predetermined criterion;
    (d) the interface controller (103) also for receiving an instruction from the user indicating when the user wishes to commence use of the content at the device;
    (e) the input (108) also for receiving content from the content server and storing it at least until it is required for use; and
    (f) a consumption controller (106) for commencing use of the content according to the instruction.

12. A computer program adapted to, when executed by the system of claim 10, perform the method of any one of claims 1 to 9.

**Patentansprüche**

1. Verfahren zur Übertragung von Inhalt über ein Netzwerk zur Verwendung auf einem Gerät, wobei das Verfahren umfasst:

    (1) Empfangen (T1), durch einen Inhaltsserver, einer Anfrage nach Inhalt von dem Gerät, wobei der Inhalt abspielbaren Inhalt umfasst;
    (2) Senden (T2), durch den Inhaltsserver, einer Anfrage nach einer Inhaltsbereitschaftsschätzung für den angefragten Inhalt an eine Übertragungsvorhersagefunktion;
    (3) Bestimmen, durch die Übertragungsvorhersagefunktion, der Bereitschaftsschätzung durch Schätzen, wann der Inhalt zur Verwendung auf dem Gerät bereit sein wird, nach einem vorbestimmten Kriterium, basierend auf Netzwerkbedingungen, die die Übertragung des Inhalts von dem Inhaltsserver zu dem Gerät beeinflussen, wobei das vorbestimmte Kriterium ist, dass der Inhalt kontinuierlich oder ohne Unterbrechung verwendet werden kann, ohne pausieren zu müssen, um weiteren Inhalt zu empfangen, bevor die Verwendung wieder beginnen kann, wobei sich die Bereitschaftsschätzung auf die geschätzte Zeit bezieht, die benötigt wird, um Inhalt vor Beginn der Wiedergabe auf dem Gerät zu puffern, um eine kontinuierliche oder ununterbrochene Wiedergabe bereitzustellen, und wobei der Bestimmungsschritt weiter umfasst, bei einem Bestimmen, dass eine Bewegung des Gerätes zwischen Netzwerkzellen möglich oder wahrscheinlich ist, bevor mit einer Verwendung des Inhalts auf dem Gerät begonnen wird, Durchführen des Schätzschrittes unter Berücksichtigung von Daten, die sich auf historische Mobilität des Gerätes zwischen einer Vielzahl von Netzwerkzellen beziehen, die von dem Gerät besucht werden, wobei die Netzwerkbedingungen innerhalb dieser besuchten Zellen die Leistung des Schätzschrittes beeinflussen;

(4) Empfangen (T3), durch den Inhaltsserver, der Bereitschaftsschätzung von der Übertragungsvorhersagefunktion;

(5) Senden (T4), durch den Inhaltsserver, einer Antwort an das Gerät, die die Bereitschaftsschätzung bereitstellt; und

(6) Senden (T5), durch den Inhaltsserver, des angeforderten Inhalts an das Gerät zu einem vom Benutzer des Gerätes ausgewählten Zeitpunkt, um den angeforderten Inhalt herunterzuladen.

2. Verfahren nach Anspruch 1 weiter umfassend, auf dem Gerät:

(a) Senden (S1) einer Anfrage nach dem Inhalt an den Inhaltsserver, der sich in dem Netzwerk befindet;

(b) Empfangen (S2) der Antwort von dem Inhaltsserver, die die Inhaltsbereitschaftsschätzung für den angefragten Inhalt bereitstellt;

(c) Präsentieren (S3) einer Inhaltsbereitschaftsanzeige an den Benutzer des Gerätes, wobei die Bereitschaftsanzeige in Abhängigkeit von der Bereitschaftsschätzung abgeleitet wird, und Anzeigen an den Benutzer, wann oder ob der Inhalt zur Verwendung auf dem Gerät bereit sein wird oder ist, nach dem vorbestimmten Kriterium;

(d) Empfangen (S4) einer Anweisung von dem Benutzer, die anzeigt, wann der Benutzer mit der Verwendung des Inhalts auf dem Gerät beginnen möchte;

(e) Empfangen (S5) des Inhalts von dem Inhaltsserver und zumindest solange Speichern des Inhalts, bis er zur Verwendung benötigt wird; und

(f) Beginnen (S6) einer Verwendung des Inhalts nach der Anweisung.

3. Verfahren nach Anspruch 2, wobei die in Schritt (c) präsentierte Bereitschaftsanzeige eine relative oder absolute Zeit bereitstellt, zu der der Inhalt zur Verwendung auf dem Gerät bereit sein wird, nach dem vorbestimmten Kriterium.

4. Verfahren nach Anspruch 3, umfassend Präsentieren einer Möglichkeit, die Verwendung des Inhalts zu der in der Bereitschaftsanzeige bereitgestellten relativen oder absoluten Zeit oder zu einer vorbestimmten Zeit danach zu beginnen, an den Benutzer und wobei die in Schritt (d) empfangene Anweisung lautet, eine Verwendung des Inhalts zu der in der Bereitschaftsanzeige bereitgestellten relativen oder absoluten Zeit oder zu einer vorbestimmten Zeit danach zu beginnen.

5. Verfahren nach einem der Ansprüche 2 bis 4, umfassend Präsentieren einer Möglichkeit, eine höhere Netzwerkpriorität für Inhaltsübertragung zu verwenden, an den Benutzer.

6. Verfahren nach einem der Ansprüche 4 bis 5, wobei die verschiedenen Möglichkeiten mit unterschiedlichen entsprechenden Kosten für den Benutzer verbunden sind.

7. Verfahren nach einem der Ansprüche 2 bis 6, wobei der Inhalt eine Vielzahl von Inhaltselementen umfasst, die in zeitlicher Abfolge verwendet werden sollen, und wobei die Inhaltselemente von dem Inhaltsserver im Wesentlichen in zeitlicher Abfolge empfangen werden, um eine Verwendung des Inhalts, die in Schritt (f) zu beginnen ist, zu ermöglichen, bevor der gesamte Inhalt an dem Gerät empfangen wurde.

8. Verfahren nach einem der Ansprüche 2 bis 6, wobei der abspielbare Inhalt Video- oder Audio-Inhalt umfasst und wobei Verwenden des Inhalts Abspielen des Inhalts umfasst.

9. Verfahren nach Anspruch 1, umfassend Durchführen des Schätzschrittes unter Berücksichtigung des Durchsatzes in der aktuellen Netzwerkzelle des Gerätes.

10. System umfassend eine Übertragungsvorhersagefunktion und einen Inhaltsserver zur Übertragung von Inhalt über ein Netzwerk zur Verwendung auf einem entfernten Gerät, wobei das System angepasst ist, um das Verfahren nach Anspruch 1 durchzuführen, wobei der Inhaltsserver umfasst:

(a) einen Eingang (208) zum Empfangen einer Anfrage nach Inhalt von dem Gerät;

(b) einen Ausgang (208) zum Senden einer Anfrage nach einer Inhaltsbereitschaftsschätzung für den angefragten Inhalt an eine Übertragungsvorhersagefunktion, wobei die Bereitschaftsschätzung eine Schätzung ist, wann der Inhalt zur Verwendung auf dem Gerät bereit sein wird, nach einem vorbestimmten Kriterium, basierend auf Netzwerkbedingungen, die die Übertragung des Inhalts von dem Inhaltsserver zu dem Gerät beeinflussen;

(c) der Eingang (208) auch zum Empfangen der Bereitschaftsschätzung von der Übertragungsvorhersagefunktion;

(d) der Ausgang (208) auch zum Senden einer Antwort an das Gerät, die die Bereitschaftsschätzung bereitstellt; und

(e) der Ausgang (208) auch zum Senden des angefragten Inhalts zu dem Gerät.

11. System nach Anspruch 10, weiter umfassend ein Gerät, das angepasst ist, um das Verfahren nach Anspruch 2 durchzuführen, wobei das Gerät umfasst:

(a) einen Ausgang (108) zum Senden einer Anfrage nach einem Inhalt an einen Inhaltsserver, der sich in einem Netzwerk befindet;

(b) einen Eingang (108) zum Empfangen einer Antwort von dem Inhaltsserver, die eine Inhaltsbereitschaftsschätzung für den angefragten Inhalt bereitstellt, wobei die Bereitschaftsschätzung eine Schätzung ist, wann der Inhalt zur Verwendung auf dem Gerät bereit sein wird, nach einem vorbestimmten Kriterium, basierend auf Netzwerkbedingungen, die die Übertragung des Inhalts von dem Inhaltsserver zu dem Gerät beeinflussen;

(c) eine Schnittstellensteuerung (103) zum Präsentieren einer Inhaltsbereitschaftsanzeige an einen Benutzer des Gerätes, wobei die Bereitschaftsanzeige in Abhängigkeit von der Bereitschaftsschätzung abgeleitet wird, und Anzeigen an den Benutzer, wann oder ob der Inhalt zur Verwendung auf dem Gerät bereit sein wird oder ist, nach dem vorbestimmten Kriterium;

(d) die Schnittstellensteuerung (103) auch zum Empfangen einer Anweisung von dem Benutzer, die anzeigt, wann der Benutzer mit der Verwendung des Inhalts auf dem Gerät beginnen möchte;

(e) der Eingang (108) auch zum Empfangen von Inhalt von dem Inhaltsserver und zumindest solange Speichern des Inhalts, bis er zur Verwendung benötigt wird; und

(f) eine Verbrauchssteuerung (106) zum Beginnen einer Verwendung des Inhalts nach der Anweisung.

12. Computerprogramm, das angepasst ist, um das Verfahren nach einem der Ansprüche 1 bis 9 durchzuführen, wenn es durch das System nach Anspruch 10 ausgeführt wird.

## Revendications

1. Procédé de fourniture de contenu sur un réseau pour l'utilisation au niveau d'un dispositif, le procédé comprenant :

(1) la réception (T1), par un serveur de contenu, d'une demande de contenu à partir du dispositif, dans lequel le contenu comprend un contenu lisible ;

(2) l'envoi (T2), par le serveur de contenu, d'une demande pour une fonction de prédiction de fourniture pour une estimation de disponibilité de contenu pour le contenu demandé ;

(3) la détermination, par la fonction de prédiction de fourniture, de l'estimation de disponibilité en estimant quand le contenu sera prêt pour l'utilisation au niveau du dispositif en fonction d'un critère prédéterminé, sur la base de conditions de réseau affectant la fourniture du contenu du serveur de contenu au dispositif,

dans lequel le critère prédéterminé est que le contenu peut être utilisé en continu ou sans interruption, sans avoir à effectuer une pause afin de recevoir davantage de contenu avant que l'utilisation puisse recommencer,

dans lequel l'estimation de disponibilité se rapporte au temps estimé comme étant nécessaire pour mettre en mémoire tampon un contenu au niveau du dispositif avant le commencement de la lecture pour fournir une lecture continue ou sans interruption, et

dans lequel l'étape de détermination comprend en outre, lors de la détermination qu'un mouvement du dispositif entre des cellules de réseau est possible ou probable avant que l'utilisation du contenu soit commencée au niveau du dispositif, la réalisation de l'étape d'estimation tout en tenant compte de données relatives à une mobilité historique du dispositif parmi une pluralité de cellules de réseau visitées par le dispositif, avec des conditions de réseau dans les cellules visitées influençant la réalisation de l'étape d'évaluation ;

(4) la réception (T3), par le serveur de contenu, de l'estimation de disponibilité à partir de la fonction de prédiction de fourniture ;

(5) l'envoi (T4), par le serveur de contenu, d'une réponse au dispositif fournissant l'estimation de disponibilité ; et

(6) l'envoi (T5), par le serveur de contenu, du contenu demandé au dispositif à un temps sélectionné par un utilisateur du dispositif pour télécharger le contenu demandé.

2. Procédé selon la revendication 1, comprenant en outre, au niveau du dispositif :

(a) l'envoi (S1) d'une demande pour le contenu au serveur de contenu situé dans le réseau ;

(b) la réception (S2) de la réponse à partir du serveur de contenu fournissant l'estimation de disponibilité de contenu pour le contenu demandé ;

(c) la présentation (S3) d'une indication de disponibilité de contenu à l'utilisateur du dispositif, l'indication de disponibilité étant obtenue en fonction de l'estimation de disponibilité et indiquant à l'utilisateur quand ou si le contenu sera ou est déjà prêt pour l'utilisation au niveau du dispositif en fonction du critère prédéterminé ;

(d) la réception (S4) d'une instruction à partir de l'utilisateur indiquant quand l'utilisateur souhaite commencer l'utilisation du contenu au niveau du dispositif ;

(e) la réception (S5) du contenu à partir du serveur de contenu et son stockage au moins jusqu'à ce qu'il soit nécessaire pour l'utilisation ; et

(f) le commencement (S6) de l'utilisation du contenu en fonction de l'instruction.

3. Procédé selon la revendication 2, dans lequel l'indication de disponibilité présentée dans l'étape (c) fournit un temps relatif ou absolu auquel le contenu sera prêt pour l'utilisation au niveau du dispositif en fonction du critère prédéterminé.

4. Procédé selon la revendication 3, comprenant la présentation à l'utilisateur d'une option de commencement de l'utilisation du contenu au temps relatif ou absolu fourni dans l'indication de disponibilité, ou à un temps prédéterminé ultérieur, et dans lequel l'instruction reçue dans l'étape (d) est de commencer l'utilisation du contenu au temps relatif ou absolu fourni dans l'indication de disponibilité ou à un temps prédéterminé ultérieur.

5. Procédé selon l'une quelconque des revendications 2 à 4, comprenant la présentation à l'utilisateur d'une option pour utiliser une priorité de réseau supérieure pour la fourniture de contenu.

6. Procédé selon l'une quelconque des revendications 4 à 5, dans lequel les diverses options sont associées à des coûts respectifs différents pour l'utilisateur.

7. Procédé selon l'une quelconque des revendications 2 à 6, dans lequel le contenu comprend une pluralité d'éléments de contenu destinés à être utilisés dans une séquence temporelle, et dans lequel les éléments de contenu sont reçus à partir du serveur de contenu sensiblement en séquence temporelle pour permettre que l'utilisation du contenu soit commencée dans l'étape (f) avant que tout le contenu ait été reçu au niveau du dispositif.

8. Procédé selon l'une quelconque des revendications 2 à 6, dans lequel le contenu lisible comprend un contenu vidéo ou audio, et dans lequel l'utilisation du contenu comprend la lecture du contenu.

9. Procédé selon la revendication 1, comprenant la réalisation de l'étape d'estimation en tenant compte d'un débit dans la cellule de réseau actuelle du dispositif.

10. Système comprenant une fonction de prédiction de fourniture et un serveur de contenu pour fournir un contenu sur un réseau pour l'utilisation au niveau d'un dispositif distant, le système étant adapté pour réaliser le procédé selon la revendication 1, le serveur de contenu comprenant :

(a) une entrée (208) pour recevoir une demande pour un contenu à partir du dispositif ;

(b) une sortie (208) pour envoyer à une fonction de prédiction de fourniture une demande pour une estimation de disponibilité de contenu pour le contenu demandé, l'estimation de disponibilité étant une estimation du moment où le contenu sera prêt pour l'utilisation au niveau du dispositif en fonction d'un critère prédéterminé, sur la base de conditions de réseau affectant la fourniture du contenu du serveur de contenu au dispositif ;

(c) l'entrée (208) également pour recevoir l'estimation de disponibilité à partir de la fonction de prédiction de fourniture ;

(d) la sortie (208) également pour envoyer une réponse au dispositif fournissant l'estimation de disponibilité ; et

(e) la sortie (208) également pour envoyer le contenu demandé au dispositif.

11. Système selon la revendication 10, comprenant en outre un dispositif adapté pour réaliser le procédé selon la revendication 2, dans lequel le dispositif comprend :

(a) une sortie (108) pour envoyer une demande pour un contenu à un serveur de contenu situé dans un réseau ;

(b) une entrée (108) pour recevoir une réponse à partir du serveur de contenu fournissant une estimation de disponibilité de contenu pour le contenu demandé, l'estimation de disponibilité étant une estimation de quand le contenu sera prêt pour l'utilisation au niveau du dispositif en fonction d'un critère prédéterminé, sur la base de conditions de réseau affectant la fourniture du contenu du serveur de contenu au dispositif ;

(c) un dispositif de commande d'interface (103) pour présenter une indication de disponibilité de contenu à un utilisateur du dispositif, l'indication de disponibilité étant obtenue en fonction de l'estimation de disponibilité et indiquant à l'utilisateur quand ou si le contenu sera ou est déjà prêt pour l'utilisation au niveau du dispositif en fonction du critère prédéterminé ;

(d) le dispositif de commande d'interface (103) également pour recevoir une instruction à partir de l'utilisateur indiquant quand l'utilisateur souhaite commencer l'utilisation du contenu au niveau du dispositif ;

(e) l'entrée (108) également pour recevoir un contenu à partir du serveur de contenu et stocker celui-ci au moins jusqu'à ce qu'il soit nécessaire pour l'utilisation ; et

(f) un dispositif de commande de consommation (106) pour commencer l'utilisation du contenu en fonction de l'instruction.

12. Programme informatique adapté pour, quand il est exécuté par le système selon la revendication 10, réaliser le procédé selon l'une quelconque des revendications 1 à 9.

FIG. 1

EP 2 901 642 B1

FIG. 2

FIG. 3

M

T

K

B

t

Loading
starts

Viewing
starts

Loading
stops

Playback
ends

FIG. 4

Cell-resource
usage

Traffic demand
estimation

UE-mobility

DP

Delivery
Decision
logic

**Wall-clock time**

FIG. 5

Bandwidth

UE1

UE2

UE3

or

402

or

403

t

t

t

401

FIG. 6

TransferRequest(Volume)

Selected visited cells by the UE
from historical mobility data

<u>Per visited cell</u>: Estimate average-rate $B_{AT}$ for the cell based on historical throughput data.

<u>Per visited cell</u>: Estimate average power/code $P_B$ for UE based on historical resource data.

<u>Per visited cell</u>: Estimate the cell $C_b$ =average [power,code] $P_B$ / $B_{AT}$ average 'transferred throughput' (average over a time-period and based on historical data)

$K_{margin}$: required marging to ensure spare capacity.

$P_{max}$: maximum power of the BTS

<u>Per visited cell</u>: Estimate max cell-throughput from each cell by: $Cell_{max}=k_{margin}{}^* P_{max} / C_b$

<u>Per visited cell:</u> 'un-used cell-capacity'=$Cell_{max}$- $B_{AT}$

<u>Per visited cell:</u> Estimate from the request-queue appropriate start for transfer $T_{start}$.

<u>Per visited cell:</u> Estimate delivery time $T_{dcell}$ =($T_{volume}$ −$T_{start}$) by adding the transferred volume to 'un-used cell-capacity'. $T_{volume}$ is the time-instant when the 'un-used cell-capacity volume is higher than the transfer requested volume (see figure to the left)

$T_{start}$      $T_{volume}$

Select Max($T_{dcell}$) over the visited cell.

FIG. 7

Kmargin: required
marging to ensure
spare capacity.

$P_{max}$: maximum
power of the BTS

$T_{start}$    $T_{volume}$

TransferRequest(Volume)

Current visiting cell

Estimate average-rate $B_{AT}$ for the cell based on historical throughput data.

Per visited cell: Estimate average throughputs $B_P(i)$ during time-intervals of **T i.e. 2s-1min.** from historical throughput data.

Estimate max cell-throughput by: **$Cell_{max} = K_{margin} *max\{ B_P(i) \}$**

'un-used cell-capacity'=$Cell_{max}$- $B_{AT}$

Estimate from the request-queue appropriate start for transfer $T_{start}$.

Estimate delivery time $T_{dcell} = (T_{volume} - T_{start})$ by adding the transferred volume to 'un-used cell-capacity'. $T_{volume}$ is the time-instant when the 'un-used cell-capacity volume is higher than the transfer requested volume (see figure to the left)

FIG. 8

UE <u>100</u>

101 | Display |
104 | Audio |

108 | Input/Output |
105 | Content Player |

103 | Interface controller |
106 | Playback controller |

107 | Data Storage |

FIG. 9

Content Server <u>200</u>

201
Content Readiness Estimate Provider

202
Content Delivery Controller

Input/Output
208

300
Delivery Prediction Function

Content 203
Data Storage 204

FIG. 10

Delivery
Prediction
Function 300

Content
Readiness
Estimator

301

Input/Output

308

Historical
Data

302

Network
Data

303

FIG. 11

| Sending request for content | S1 |
| Receiving response comprising content readiness estimate | S2 |
| Presenting content readiness estimate | S3 |
| Receiving instruction indicating when user wishes to use content | S4 |
| Receiving and storing content from content server | S5 |
| Commencing use according to the instruction | S6 |

FIG. 12

| | |
|---|---|
| Receiving, from a device, a request for content | T1 |
| Sending, to a delivery prediction function, a request for a content readiness estimate | T2 |
| Receiving a content readiness estimate | T3 |
| Sending, to the device, a response providing a content readiness estimate | T4 |
| Sending the requested content to the device | T5 |

FIG. 13

CPU 10

I/O Interface 40

Data Storage 20

Program storage 30

1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6304909 B1
- US 2003074379 A1
- US 5908467 A
- US 2008192820 A1